Europäisches Patentamt

European Patent Office

Office européen des brevets

(11) Veröffentlichungsnummer: **0 191 411**
A2

(12) # EUROPÄISCHE PATENTANMELDUNG

(21) Anmeldenummer: 86101483.5

(22) Anmeldetag: 05.02.86

(51) Int. Cl.⁴: **E 04 C 2/26,** E 04 F 15/20, B 32 B 13/04

(30) Priorität: 13.02.85 DE 3504821

(43) Veröffentlichungstag der Anmeldung: 20.08.86
Patentblatt 86/34

(84) Benannte Vertragsstaaten: AT BE CH DE FR GB IT LI NL

(71) Anmelder: **Henkel Kommanditgesellschaft auf Aktien,
Postfach 1100 Henkelstrasse 67,
D-4000 Düsseldorf-Holthausen (DE)**

(72) Erfinder: **Rosenbaum, Erich, Mainzer Strasse 35,
D-5400 Koblenz (DE)**

(54) **Verfahren zur akustischen Dämmung von Betonelementen beziehungsweise mit einer akustischen Dämmung ausgestattetes Betonelement.**

(57) Verfahren zur akustischen Dämmung von Betonelementen durch Verkleben einer 2 bis 20 mm starken Matte aus mit Polyurethan-Bindemittel gebundenen Schnitzeln aus Synthese- oder Naturkautschuk mit einem Klebstoff beziehungsweise Bindemittel auf eine Betonunterlage nach dem Abbinden der Zementmasse, so daß ein Wiederaufnehmen der Matte ohne Materialbruch nicht mehr möglich ist, vorzugsweise unter Verwendung eines lösungsmittelfreien Epoxidharz-Zweikomponentenklebers und/oder lösungsmittelfreien Polyurethan-Zweikomponentenklebers sowie mit einer solchen akustischen Dämmung ausgestattetes Betonelement.

Henkelstraße 67

4000 Düsseldorf, den 8.2.1985

**Henkel** KGaA
ZR-FE/Patente

Dr.SchOe/Ge/Br

0191411

Patentanmeldung

### D 7281 EP

"Verfahren zur akustischen Dämmung von Betonelementen beziehungsweise mit einer akustischen Dämmung ausgestattetes Betonelement"

---

Gegenstand der vorliegenden Patentanmeldung ist ein Verfahren zur akustischen Dämmung von Betonelementen sowie ein mit einer akustischen Dämmung ausgestattetes Betonelement. Betonelemente im Sinne der Erfindung sind alle im Bau anzutreffenden Betonkonstruktionen, beispielsweise Betonwände und -decken, insbesondere die obere Seite derartiger Betondecken, d.h. deren Lauffläche beziehungsweise Fußbodenkonstruktion.

Im modernen Hochbau ändern sich in der letzten Zeit die Bauweise bezüglich des Deckenaufbaus sowie die an die Betondecken zu stellenden schallschutztechnischen Maßnahmen ständig. Es ist dabei nicht ausgeblieben, daß bei verschiedenen Bautechniken unter Anwendung der traditionellen Konstruktionsarten auch nicht vertretbare Geräuschübertragungen zwischen den benachbarten Raumeinheiten zustandegekommen sind. Über die damit im Zusammenhang stehenden Probleme gibt beispielsweise die Zeitschrift "Boden, Wand, Decke" 11 (1984) zum Schallschutz im Hochbau verschiedene Aspekte wieder.

...

Im Wohnungsbau darf beispielsweise zur Dämmung des Trittschallschutzes von Deckenkonstruktionen nur der schwimmende Estrich in die Berechnung miteinbezogen werden. Die Verbesserung des Trittschallschutzes durch weichfedernde Bodenbeläge ist zu vernachlässigen, da diese infolge eingetretenen Verschleißes und evtl. Austauschs nicht konstant bleibt.

Aufgabe der vorliegenden Erfindung war es daher, ein hohes Maß an Trittschallschutz-Verbesserung zu erreichen, insbesondere bei den jetzt häufig angefertigten monolithisch hergestellten Deckenkonstruktionen. Dieses Bedürfnis bestand insbesondere deshalb, weil infolge der Weiterentwicklung der Konstruktionsausführungen der monolithischen Decken Fortschritte gemacht werden.

Die erfindungsgemäß gestellte Aufgabe wird nun gelöst durch ein Verfahren zur akustischen Dämmung von Betonelementen, welches dadurch gekennzeichnet ist, daß man auf eine Betonunterlage nach dem Abbinden der Zementmasse eine 2 bis 20 mm starke Matte aus mit Polyurethan-Bindemittel gebundenen Schnitzeln aus Synthese- oder Naturkautschuk mit einem Klebstoff beziehungsweise Bindemittel so fest verklebt, daß ein Wiederaufnehmen der Matte ohne Materialbruch nicht mehr möglich ist.

Nach einer bevorzugten Ausführungsform hat die Polyurethan-gebundene Matte aus Schnitzeln aus Synthese- oder Naturkautschuk eine Dicke von 3 bis 14 mm. Im Wohnungsbau bzw. Bürobau wird man im allgemeinen mit einer Dicke von 4 bis 8 mm auskommen, während man für Sportanlagen, insbesondere dann wenn ein zusätzlicher Gehkomfort erreicht bzw. spezielle sporttechnische

...

Eigenschaften eingestellt werden sollen, eine höhere
Dicke der Matte anstrebt.

Die akustische Dämmung ist selbstverständlich von der
Stärke der Matte abhängig und bei 4 mm erreicht man
8 dB bzw. bei 6 mm Stärke 10 dB nach TSM (= Trittschallschutzmaß).

Bei den einzusetzenden mit Polyurethanharz gebundenen
Matten handelt es sich um an sich bekannte Produkte.
Sie werden hergestellt, indem man Schnitzel von
2 bis 30 mm Länge aus vulkanisiertem Abfallkautschuk,
d.h. Recycling-Kautschuk, gegebenenfalls unter Mitverwendung von frischer Kautschukmasse und/oder Polyurethanschaumstoff, mit einem Polyurethan-Bindemittel
verklebt. Dabei werden diese Schnitzel bzw. gekörnten
Kautschukflocken bzw. Fasern mit üblichen Polyester-
oder Polyetherisocyanatklebern zusammengepreßt. Derartige Polyurethan-Kleber stellen ein Zweikomponentensystem dar. Die eine Komponente enthält OH-Gruppen,
insbesondere primäre OH-Gruppen, und besteht aus einem
Polyester oder Polyether, beispielsweise Polyoxypropylen oder polymerisiertes Tetrahydrofuran. Als zweite
Komponente verwendet man ein Isocyanat, vorzugsweise
Toluylendiisocyanat oder Diphenylmethandiisocyanat.
Der Einsatz von anderen polyfuktionellen Isocyanaten,
beispielsweise von Isophorondiisocyanat ist selbstverständlich auch möglich. Nach dem Abbinden des Klebers
werden dann aus diesen Polyurethanpolymer-Rohlingen die
Matten abgeschält.

Die an sich handelsüblichen Matten der vorstehend
geschilderten Art werden dann mit einem hochfesten

...

Kleber beziehungsweise Bindemittel, so fest mit der
Unterlage verklebt, daß eine Wiederaufnahme der Matte
ohne Materialbruch nicht möglich ist. Somit wird
die Matte ein integraler Bestandteil der Betondecke,
insbesondere der monolithischen Betonkonstruktion.
Generell können hierzu alle Kleber beziehungsweise
Bindemittel Verwendung finden, die hochfeste Bindungen
zwischen Beton einerseits und Kautschukmaterialien
andererseits bewerkstelligen. In Frage kommen hierzu
beispielsweise handelsübliche  Reaktionskleber oder
Zweikomponentenkleber sowie ferner auch entsprechende
lösungsmittelhaltige Klebstoffe. Im Rahmen der vorliegenden Erfindung finden zum Verkleben der genannten
Materialien jedoch insbesondere Klebstoffe auf Basis
von Epoxidharz beziehungsweise Polyisocyanaten, d.h.
sogenannte lösungsmittelfreie Epoxidharz-Zweikomponentenkleber und/oder lösungsmittelfreie Polyurethan-Zweikomponentenkleber, Verwendung. Auch hierbei handelt
es sich um bekannte, handelsübliche Klebstoffsysteme
auf Basis von reaktionsfähigen Hydroxylgruppen enthaltenden Polyethern oder Polyestern sowie üblichen
mehrfunktionellen Isocyanaten, beispielsweise Diphenylmethandiisocyanat oder Isophoronisocyanat.


Nachdem die Matte fest mit der Betonunterlage verbunden
ist, erfolgt vorzugsweise ein Abspachteln derselben,
beispielsweise mit einer Polyurethanklebstoffmasse
oder aber auch mit einer Dispersionsspachtelmasse,
beispielsweise auf Basis von Polyvinylacetat beziehungsweise Polyacrylestern. Die so auf die Matte aufgebrachte
Zwischenschicht beziehungsweise Sperrschicht kann mit
den verschiedensten Zusatzstoffen versehen sein, insbesondere hellen Füllstoffen wie etwa Calciumcarbonat,
Bariumsulfat, Anhydrid oder dergleichen mehr. Außerdem

...

0191411

kann sie elektrisch leitende Fasern, beispielsweise aus Kupfer oder aus anderen widerstandsfähigen Metallen, oder auch elektrisch leitfähige Komponenten wie z.B. Graphit beziehungsweise Ruß enthalten. Dadurch kann wirksam eine elektrostatische Aufladung der auf diese Sperrschicht aufgeklebten Verschleißschicht verhindert werden.

Die Zwischenschicht beziehungsweise Sperrschicht kann außerdem die Diffusion migrationsfähiger Bestandteile der Kautschukmatte beziehungsweise solche des Klebers, mit dem die Verschleißschicht aufgebracht wird, verhindern. Schließlich kann man infolge der Beifügung der eben genannten Füllstoffe verhindern, daß eine zu feste Bindung zwischen der polyurethangebundenen Matte und der darauf aufgeklebten Verschleißschicht erreicht wird, so daß ein späteres Auswechseln der Verschleißschicht leicht möglich ist.

Anschließend kann dann auf die so vorbereitete Deckenkonstruktion in bekannter Weise nach den fachlichen Regeln von DIN 18365 der eigentliche Bodenbelag als Verschleißschicht aufgebracht werden. Es handelt sich hier beispielsweise um 2,5 bis 3 mm dicke Linoleumschichten, um PVC-Bodenbeläge einer Dicke von 1,5 bis 4 mm oder um Nadelvliesbodenbeläge beziehungsweise um Veloursteppichboden, der auf der Rückseite mit einem Latex versehen ist sowie aber auch um Schlingenteppichboden, den man zweckmäßig ebenfalls mit einer Latexunterlage versieht. Auch derartige Bodenbeläge können elektrisch leitfähig ausgestaltet sein.

Selbstverständlich ist es auch möglich, neben den genannten Teppichbelägen Parkett, beispielsweise Stabparkett in verschiedenen Stärken aufzubringen.

...

Da die eigentliche Trittschalldämmung durch die fest mit der Betondecke verbundenen Polyurethan gebundenen Schnitzelmatte erreicht wird, ist die eigentliche Verschleißschicht von sekundärer Bedeutung. Besonders bewährt hat sich - worauf eingangs bereits hingewiesen wurde - die Anwendung des bekannten Verfahrens bei der Herstellung von monolithischen Betondecken.

Gegenstand der vorliegenden Patentanmeldung ist neben einem Verfahren zur akustischen Dämmung von Betonelementen auch die nach diesem Verfahren selbst hergestellte Konstruktion beziehungsweise das Betonelement und insbesondere der Aufbau der schallgedämmten Deckenkonstruktion.

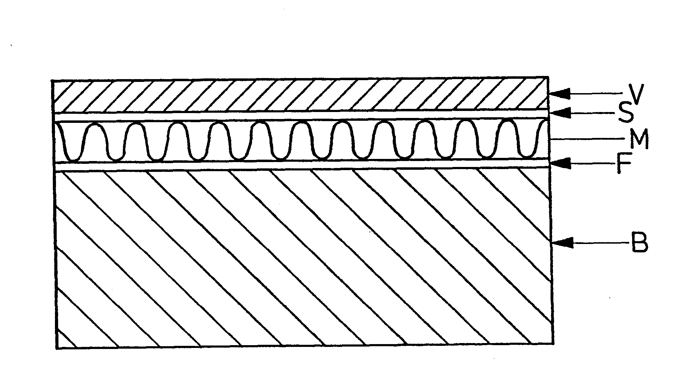

In der Abbildung bedeuten:

B = Betondecke

F = Festkleber aus Epoxidharz oder Polyurethanharz

M = Kautschukmatte

S = Spachtelschicht

V = Verschleißschicht (Teppich, Parkett)

...

## Beispiel 1

Auf eine monolithische Deckenkonstruktion, welche
vollständig trocken ist, wurde ein Zweikomponenten-
Epoxidharzkleber aufgebracht. Er bestand aus 5 Gewichtsteilen eines handelsüblichen Epoxidharzes auf Basis
von Diphenylolpropan (Epoxidwert 0,5 bis 0,55) sowie
1 Gewichtsteil eines üblichen Härtungsmittels für ein
derartiges Epoxidharz auf Basis eines freien Aminogruppen aufweisenden Polyaminoamids($H_{aktiv}$-Äquivalent-
gewicht ca. 39) nach Aufspachteln einer derartigen 2 mm
dicken Epoxidharzkleberschicht, welche eine Topfzeit
von etwa 2 Stunden hatte, wurden mit Polyurethanbindemitteln gebundene Schnitzel aus Butadienstyrol-Kautschuk (Bindemittelgehalt 15 %) eingelegt. Die Fläche
betrug insgesamt 12 $m^2$. Die beiden eingelegten Bahnen
hatten eine Abmessung von je 4 x 1,5 m. Nach 24 Stunden
war das Epoxidharz abgebunden und die Matten waren fest
mit der Betonunterlage gebunden.

Anschließend wurden die Matten mit einer ca. 1 mm
dicken Schicht einer Polyurethankautschuk-Spachtelmasse abgespachtelt.

Nach 15 Stunden wurde auf diese abgespachtelte Fläche
handelsüblicher textiler Bodenbelag (Schlingenware
mit latexiertem Rücken) unter Verwendung von gelöstem
Kunstharzklebstoff geklebt.

## Beispiel 2

Es wurde auf eine monolithische Betonunterlage ein
lösungsmittelfreier Polyurethan-Zweikomponentenkleber
aufgebracht. Er bestand aus 1,76 Gewichtsteilen eines

...

0191411

OH-Gruppen aufweisenden Polyethers auf Basis von Polypropylenoxid mit einem durchschnittlichen Molekulargewicht von 200 (OH-Gehalt 5 %) sowie 1 Gewichtsteil technischem Methylendiisocyanat. In diese Schicht
wurden Matten von mit Polyurethanbindemittel gebundenen
Schnitzeln aus Naturkautschuk eingelegt, die eine
Stärke von 8 mm aufwiesen. Nach 16 Stunden wurde auf
diese Schicht eine Spachtelmasse auf Basis einer
handelsüblichen Styrolacrylester-Dispersion (60 %ig)
- mit 5 % elektrisch leitfähigem Ruß und Kreide als
Füllstoff (40 Gew.-%) - in einer Stärke von 1 mm
aufgespachtelt. Nach dem Verdunsten des Wassers (12
Stunden) wurde auf diese elektrisch leitfähige Sperr-
beziehungsweise Spachtelschicht mittels eines Polychloroprenklebers ein Fußbodenbelag aus 2 mm starken
PVC -Platten aufgeklebt.

...

0191411

## Patentansprüche

1. Verfahren zur akustischen Dämmung von Betonelementen, dadurch gekennzeichnet, daß man auf eine Betonunterlage nach dem Abbinden der Zementmasse eine 2 bis 20 mm starke Matte aus mit Polyurethan-Bindemittel gebundenen Schnitzeln aus Synthese- oder Naturkautschuk mit einem Klebstoff beziehungsweise Bindemittel so fest verklebt, daß ein Wiederaufnehmen der Matte ohne Materialbruch nicht mehr möglich ist.

2. Verfahren nach Anspruch 1, dadurch gekennzeichnet, daß man Betonunterlage und Matte mit einem lösungsmittelfreien Epoxidharz-Zweikomponentenkleber und/oder lösungsmittelfreien Polyurethan-Zweikomponentenkleber verklebt.

3. Verfahren nach Anspruch 1 und 2, dadurch gekennzeichnet, daß man eine Matte mit einer Dicke von 3 bis 14 mm verklebt.

4. Verfahren nach den Ansprüchen 1 bis 3, dadurch gekennzeichnet, daß man auf die Matte zusätzlich eine Sperr- beziehungsweise Spachtelschicht aufbringt und darauf anschließend eine Verschleißschicht klebt.

5. Verfahren nach Anspruch 4, dadurch gekennzeichnet, daß man die Sperr- beziehungsweise Spachtelschicht und/oder die Verschleißschicht elektrisch leitfähig ausgestaltet.

...

0191411

6. Mit einer akustischen Dämmung ausgestattetes Betonelement, dadurch gekennzeichnet, daß das Betonelement mittels eines Klebstoffes beziehungsweise Bindemittels so fest mit einer 2 bis 20 mm starken Matte aus mit Polyurethan-Bindemittel gebundenen Schnitzeln aus Synthese- oder Naturkautschuk verklebt ist, daß ein Wiederaufnehmen der Matte ohne Materialbruch nicht möglich ist.

7. Betonelement nach Anspruch 6, dadurch gekennzeichnet, daß die Matte mit einem lösungsmittelfreien Epoxidharz-Zweikomponentenkleber und/oder einem lösungsmittelfreien Polyurethan-Zweikomponentenkleber verklebt ist.

8. Betonelement nach Anspruch 6 und 7, dadurch gekennzeichnet, daß die Matte eine Dicke von 3 bis 14 mm aufweist.

9. Betonelement nach den Ansprüchen 6 bis 8, dadurch gekennzeichnet, daß dieses Element eine monolithische Deckenkonstruktion ist.

10. Betonelement nach den Ansprüchen 6 bis 9, dadurch gekennzeichnet, daß zusätzlich auf der Matte eine Sperr- beziehungsweise Spachtelschicht aufgebracht ist und darauf eine Verschleißschicht aufgeklebt ist, wobei Sperr- beziehungsweise Spachtelschicht und/oder Verschleißschicht elektrisch leitfähig ausgestaltet sind.

D 7281 EP

Henkel KGaA
ZR-FE/Patente